# FASCICULE DE BREVET EUROPEEN

(11) **EP 2 602 194 B1**
(45) Date de publication et mention de la délivrance du brevet: **27.11.2019**
(21) Numéro de dépôt: 12195095.0
(22) Date de dépôt: 30.11.2012
(51) Int. Cl.: B64G 1/10, B64G 1/24, B64G 1/50

(54) **Procédé de commande d'un ensemble d'au moins deux satellites, conçus pour fournir un service sur une orbite geostationnaire, rendant ledit service sur une orbite non-geostationnaire**
Verfahren zum Steuern einer Anordnung von mindestens zwei Satelliten ausgelegt für eine Aufgabe auf einem geostationären Orbit, die diese Aufgabe auf einem nicht-geostationären Orbit erbringen
Method for controlling an arrangement of at least two satellites designed for providing a service on a geostationary orbit, providing said service on a non-geostationary orbit

(30) Priorité: 09.12.2011 FR 1103778
(43) Date de publication de la demande: 12.06.2013
(73) Titulaire: Thales, 92400 Courbevoie (FR)
(72) Inventeur: Sainct, Hervé, 06110 Le Cannet (FR); Amalric, Joël, 06810 Auribeau-sur-Saigne (FR)
(74) Mandataire: Brunelli, Gérald

(56) Documents cités:
- EP-A1- 0 017 597
- WO-A2-01/33720
- US-A- 6 082 677
- US-A1- 2008 128 559

## Description

La présente invention porte sur un procédé de commande d'un ensemble d'au moins deux satellites, conçus pour fournir un service sur une orbite géostationnaire, rendant ledit service sur une orbite non-géostationnaire.

La disponibilité opérationnelle d'un service rendu par un système spatial comprenant une pluralité de satellites est un critère sévère et coûteux.

Il est bien connu des satellites prévus pour être utilisés sur des orbites géostationnaires, comprenant notamment des faces dites froides munies d'échangeurs thermiques permettant de limiter la chauffe du satellite. Toutefois, ces satellites géostationnaires ne sont pas adaptés pour rendre un service nécessitant une orbite non-géostationnaire. Le document WO 01/33720 A2 décrit un système de satellites non-géostationnaires dans lequel on désactive les satellites qui comportent une trace au sol au sud de l'équateur.

Un but de l'invention est de pallier les précédents problèmes.

Aussi, il est proposé, selon un aspect de l'invention, un procédé de commande d'un ensemble d'au moins deux satellites, conçus pour fournir un service sur une orbite géostationnaire, rendant ledit service sur une orbite non-géostationnaire, dans lequel on désactive des moyens participant à la réalisation dudit service embarqués à bord d'un satellite lorsque le soleil peut l'endommager, et on active des moyens participant à la réalisation dudit service embarqués à bord d'un autre satellite de l'ensemble, lorsque cela est nécessaire à la continuité du service.

Ainsi, grâce à l'invention, il est possible d'utiliser des satellites géostationnaires de conception connue, sur des orbites non-géostationnaires, et ainsi économiser des coûts très importants de développement.

Selon un mode de réalisation, on commande l'attitude d'un satellite en tenant compte de la position instantanée du soleil, de sorte que l'attitude du satellite est provisoirement modifiée lorsque le soleil peut l'endommager.

Ainsi, le satellite n'est pas endommagé par le soleil, et sa ou ses charges utiles peuvent être utilisées plus longuement.

Dans un mode de réalisation, ladite commande d'attitude comprend un pilotage continu en angle de lacet ou "yaw steering" en langue anglo-saxonne, de sorte que l'attitude du satellite est modifiée de manière continue lorsque le soleil peut l'endommager, puis lorsque le soleil ne risque plus d'endommager le satellite, la commande d'attitude est à nouveau modifiée de sorte que le pointage du satellite rejoigne le pointage normal vers une zone géographique cible sur laquelle ledit service doit être rendu.

De tels changements provisoires du mode de contrôle d'attitude permet ainsi une utilisation plus longue des fonctions du satellite sur son orbite, par exemple, une charge utile du satellite fonctionnera ainsi sur une plus grande partie de l'orbite, augmentant la disponibilité opérationnelle.

Selon un mode de réalisation, ledit service rendu par l'ensemble de satellites étant l'imagerie d'une zone géographique de la Terre, les moyens participant à la réalisation dudit service embarqués à bord d'un satellite sont activés avec un décalage temporel entre lesdits satellites, relatif à la durée de prise de vue d'un satellite.

Ainsi, on démarre une prise de vue sur un satellite, puis on démarre une prise de vue de la même région sur le satellite suivant lorsque le satellite précédent a enregistré une partie de l'image, de façon à obtenir des images plus fréquentes.

Dans un mode de réalisation, l'ensemble comprenant deux satellites, la prise de vue d'une zone géographique par un satellite démarre lorsque l'autre satellite a effectué la moitié de la prise de vue de ladite zone géographique.

On obtient ainsi des images deux fois plus fréquentes.

Selon un mode de réalisation, lorsque le soleil ne risque pas d'endommager lesdits satellites, on commande lesdits satellites de sorte qu'à chaque instant, le service rendu pour une zone géographique, l'est par un seul desdits satellites.

Ainsi, on peut utiliser des orbites d'inclinaison plus faible, donc plus faciles à atteindre par un lanceur, permettant, en outre une économie de coût de lancement des satellites.

L'invention sera mieux comprise à l'étude de quelques modes de réalisation décrits à titre d'exemples nullement limitatifs et illustrés par les dessins annexés sur lesquels :
- la figure 1 illustre schématiquement un système et procédé de commande selon l'art antérieur ; et
- la figure 2 illustre schématiquement un procédé de commande selon un aspect de l'invention.

Sur les différentes figures, les éléments ayant des références identiques sont similaires.

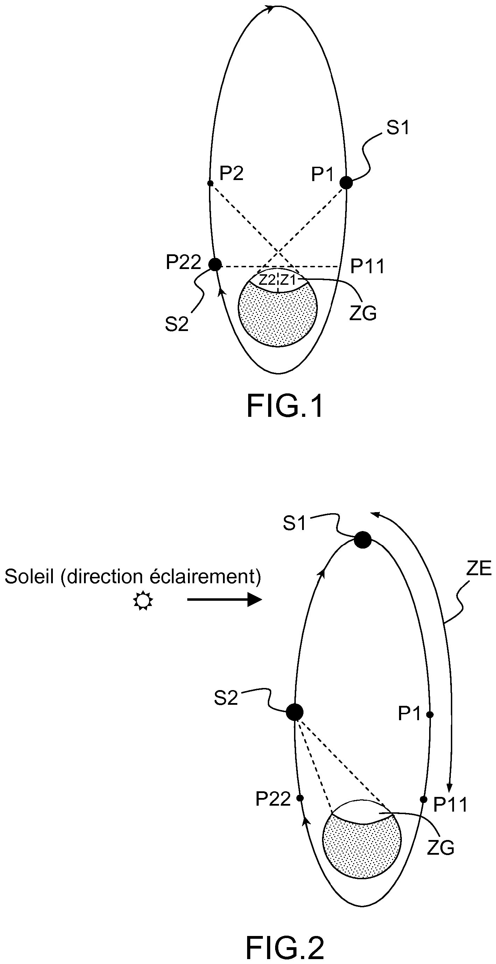

Sur la figure 1, est illustré un procédé de commande classique d'un ensemble d'au moins deux satellites, en l'espèce de deux satellites S1 et S2, conçus pour fournir un service sur une orbite non-géostationnaire.

La commande de l'ensemble de satellites est classiquement gérée de manière symétrique, comme illustré sur la figure 1, sans tenir compte de la contrainte solaire, car les satellites sont conçus pour fonctionner sur l'orbite prévue.

Sur l'exemple représenté, un premier satellite S1 peut être relayé par un deuxième satellite S2, tous deux appartenant à l'ensemble de satellites, lorsqu'ils sont respectivement aux positions P1 et P2 de l'orbite, pour lesquelles la zone géographique ZG pour laquelle le service doit être rendu, est couverte simultanément par le premier satellite S1 et le deuxième satellite S2.

En variante, il est également possible de partager la zone ZG en deux, par exemple Z1 et Z2, dont la frontière peut être variable, et correspondant à l'horizon de visibilité atteint par l'un des satellites, et d'effectuer une transition progressive au cours de laquelle, par exemple, le premier satellite S1 en position P11 couvre la sous-zone Z1 pendant que le deuxième satellite S2 en position P22 couvre la sous-zone Z2, ce qui permet un fonctionnement des satellites sur une partie plus longue de l'orbite.

Il peut arriver de disposer d'instruments ou charges utiles de satellites ayant été développés pour une orbite donnée, que l'on souhaiterait réutiliser sur une orbite différente. Ceci est particulièrement fréquent pour des satellites initialement conçus pour une orbite géostationnaire, car il y a beaucoup de satellites et services sur cette orbite.

Lorsque l'on souhaite utiliser des satellites, conçus pour être utilisés sur une orbite géostationnaire, sur une orbite non géostationnaire, par exemple sur une orbite inclinée à forte excentricité, diverses contraintes s'appliquent et rendent les charges utiles des satellites inopérantes à certains moments et/ou sur certaines parties de l'orbite. Une de ces contraintes importante est la position relative du soleil par rapport aux charges utiles des satellites.

La présente invention permet de réutiliser sans adaptation, ou avec des adaptations très mineures, des charges utiles, par exemple d'observation, initialement prévues pour l'orbite géostationnaire, pour les utiliser sur une orbite non géostationnaire, par exemple une orbite inclinée à forte excentricité.

Par opposition à l'orbite géostationnaire, les autres orbites, par exemple les orbites inclinées à forte excentricité se caractérisent notamment par des conditions d'ensoleillement très différentes. Pour l'orbite géostationnaire, le soleil se déplace autour des satellites en restant proche d'un même plan, tandis que sur une orbite non géostationnaire, telle une orbite inclinée à forte excentricité, son déplacement apparent, bien que lent, lui fait éclairer successivement la plupart des faces des satellites, ce qui est généralement incompatible avec les radiateurs de refroidissement d'une charge utile conçue pour l'orbite géostationnaire, qui ne doivent jamais être exposés au soleil.

La présente invention permet de réutiliser des satellites conçus pour des orbites géostationnaires sur des orbites non géostationnaires, par exemple dans le cas d'une flottille ou constellation de satellites, utilisant, pour exemple de service, un transfert d'une fonction d'imagerie dont la spécificité est d'être non symétrique, comme illustré sur l'exemple de la figure 2.

Il est connu des transferts d'un service comme une activité d'imagerie d'un satellite au suivant d'un ensemble de satellites qui sont généralement symétriques car définis uniquement en fonction de la géométrie relative d'observation, les satellites successifs jouant le même rôle dans ce domaine. Mais en orbite non géostationnaire, par exemple en orbite excentrique inclinée, la position du soleil, variable, rompt la symétrie, et va donc, à certains moments, empêcher l'opération de la charge utile sur l'un des satellites mais pas sur le suivant, car il n'est pas sur la même position orbitale.

Le procédé consiste alors à décider le moment du transfert de cette fonction d'observation à l'instant où l'éclairement solaire est sur le point d'interrompre le fonctionnement de la charge utile du satellite actif rendant le service.

Le satellite actif peut, de manière optionnelle, effectuer alors un changement d'attitude pour éviter que les éléments du satellite, par exemple des charges utiles, pouvant être endommagés par le soleil, tels les échangeurs thermiques ne soient exposés au soleil.

Lorsque l'une des conditions suivantes est réalisée, la commande d'attitude des satellites abandonne le pilotage continu en angle de lacet ou "yaw steering" en langue anglaise, et reprend le mode de commande précédent. Cet abandon est réalisé lorsque l'attitude résultant du yaw steering devient incompatible avec le fonctionnement d'un élément du satellite (par exemple pour une antenne radio à faisceau formé dont le champ ne serait pas symétrique, le pilotage en angle de lacet induit progressivement une rotation de la couverture au sol qui finalement n'aura plus la bonne forme ; ou bien encore pour une charge utile d'observation dont le balayage ou le post-traitement ne pourrait plus compenser une rotation excessive de la cible dû au pilotage en angle de lacet). Cet abandon est également réalisé lorsque le satellite considéré sort de la portion d'orbite où la zone cible est visible.

Ce principe de changement de pilotage temporaire d'un satellite, au moment de l'apparition de l'éclairement solaire, et dont on a précédemment décrit les critères de d'arrêt, est un procédé nouveau, distinct des considérations usuelles associées à la géométrie d'observation. Il permet de réutiliser une charge utile d'un satellite pour rendre un service, par exemple d'observation initialement conçu pour une orbite géostationnaire, sans modification et donc à faible coût, pour une orbite non géostationnaire, telle une orbite à forte excentricité.

Les lois de la mécanique orbitale associées sont ici toutes déterministes, autrement dit, la planification du transfert de service d'un satellite à un autre n'a pas à être décidée en temps réel, elle peut parfaitement être calculée et planifiée à l'avance.

En option, des modifications mineures, comme l'adaptation de baffles solaires autour des échangeurs thermiques permettent une exploitation plus longue de la charge utile en présence d'un début de soleil rasant, donc améliorent la performance au besoin.

Sur la figure 2, est illustré un exemple de procédé de commande selon un aspect de l'invention, d'un ensemble d'au moins deux satellites, en l'espèce de deux satellites S1 et S2, conçus pour fournir un service sur l'orbite géostationnaire, utilisés sur une orbite non-géostationnaire.

La zone ZE de l'orbite des satellites S1, S2 correspond à la partie de l'orbite sur laquelle l'éclairement solaire peut endommager un équipement du satellite.

La commande de transfert de service du premier satellite S1 au deuxième satellite S2 est effectuée juste avant le passage du satellite S1 dans la zone ZE de l'orbite sur laquelle l'éclairement solaire peut endommager un équipement du satellite. On commande alors, en continu, l'attitude du premier satellite S1 en tenant compte de la position instantanée du soleil, de sorte que l'attitude du satellite est provisoirement modifiée lorsque le soleil peut l'endommager. Puis, lorsque le soleil ne risque plus d'endommager le satellite S1, la commande d'attitude est à nouveau modifiée de sorte que le pointage du satellite S1 rejoigne le pointage normal vers la zone géographique cible ZG sur laquelle ledit service doit être rendu. La zone ZE de l'orbite sur laquelle l'éclairement solaire peut endommager un équipement du satellite est ainsi diminuée.

La commande d'attitude peut comprendre une commutation provisoire vers un pilotage continu en angle de lacet, de sorte que l'attitude du satellite est modifiée de manière continue lorsque le soleil peut l'endommager. Ce mode de pilotage temporaire en angle de lacet est abandonné dès que l'une des deux conditions précédemment citées est réalisée.

Aussi, il est possible d'améliorer la disponibilité opérationnelle d'un système de satellites en orbites non géostationnaires par déphasage des instants de prise d'image de deux satellites S1, S2 ayant en vue la même zone géographique ZG.

Lorsque le service rendu par l'ensemble de satellites est un service d'imagerie d'une zone géographique ZG de la Terre, les moyens participant à la réalisation dudit service embarqués à bord des satellites S1 et S2, sont activés avec un décalage temporel entre lesdits satellites, relatif à la durée de prise de vue d'un satellite.

Par exemple, la prise de vue d'une zone géographique ZG par le deuxième satellite S2 démarre lorsque le premier satellite S1 a effectué la moitié de la prise de vue de ladite zone géographique ZG.

Ainsi, un autre critère de disponibilité opérationnelle d'un service d'observation positionné sur une orbite inclinée à forte excentricité qui consiste à exiger une répétition temporelle la plus rapide possible des images prises est amélioré.

Par exemple, un client peut exiger une image de la totalité de la zone géographique cible ZG toutes les dix minutes, ce qui dimensionne directement l'instrument de prise de vue, généralement à balayage, au sens où tout le mécanisme de balayage de la zone cible et le débit de données d'images qui s'en suit sont contraints par cette période de dix minutes.

Passer de dix minutes à cinq minutes a pour conséquence qu'il faut définir un mécanisme de balayage deux fois plus rapide, des capteurs d'images associés deux fois plus sensibles (car ils sont éclairés deux fois moins longtemps), et toute la chaîne de transmission numérique et radio doit doubler son débit de données.

Grâce au décalage temporel précédemment décrit précédemment séparant les moyens participant à la réalisation du service embarqués à bord des satellites, il est ainsi possible, durant une portion significative du temps d'observation, de doubler la cadence d'observation sans avoir à supporter les fortes contraintes décrites ci-dessus.

On utilise le fait que, pour un service d'observation positionné sur une orbite inclinée à forte excentricité, il y a souvent plusieurs satellites disponibles, dont généralement deux sont actifs autour du moment du transfert de la fonction d'imagerie. Le fait que deux satellites soient disponibles simultanément permet d'obtenir potentiellement deux fois l'image de la zone cible.

Il s'agit de décaler les opérations d'imageries de façon que le début d'image du second satellite S2 se produise précisément à mi-chemin du cycle d'imagerie du premier satellite S1 : par exemple, si le cycle d'imagerie dure dix minutes, le premier satellite S1 démarre l'imagerie de la zone cible à un instant t (et termine à t + 10 mn), et le second satellite S2 démarre son imagerie à t+5mn. Le résultat est une cadence d'image toutes les cinq minutes alors même que les deux instruments ne sont capables que d'une cadence d'image toutes les dix minutes.

Cette cadence doublée n'est pas forcément disponible en permanence (sauf si le nombre de satellites est suffisamment important), mais elle reste très intéressante et, selon les réglages des paramètres orbitaux, peut s'étendre sur une partie non négligeable du temps d'observation même dans le cas minimal de deux satellites S1 et S2.

Il est également possible, en outre, lorsque le soleil ne risque pas d'endommager les satellites, de commander les satellites de sorte qu'à chaque instant, le service rendu pour une zone géographique, l'est par un seul desdits satellites.

Aussi, en variante, le premier satellite S1 peut être relayé par un deuxième satellite S2 lorsqu'ils sont respectivement aux positions P11 et P22 si la zone géographique ZG devant être couverte par le service est partagée en deux sections Z1 et Z2 (qui sont donc chacune plus petite que la zone complète ZG), la première Z1 étant dévolue au premier satellite S1 et la deuxième étant dévolue au deuxième satellite S2.

Le sectionnement de la zone géographique ZG a pour caractéristique que la première partie Z1 dévolue au premier satellite S1 se trouve préférentiellement constituée par l'élément de la zone cible ZG qui se trouve du côté où le premier satellite S1 se dirige (c'est la partie de la surface "la plus proche" du premier satellite S1).

L'autre partie Z2 constitue le complémentaire de la première Z1 dans la zone cible ZG, et les lois de la mécanique orbitale font que cette seconde section Z2 est, symétriquement, mieux située pour être observée par le second satellite S2.

Comme explicité précédemment, il est effectué un basculement progressif, i.e. les zones Z1 et Z2 changent continûment au cours du temps

Il est ainsi possible, autour du moment critique du changement de satellite rendant le service, par exemple d'observation, de soulager la contrainte de visibilité de la zone cible ZG en permettant pour chaque satellite une zone cible provisoirement plus petite (i. e. la section Z1 ou Z2) au moment où précisément l'observation devient difficile car les satellites ne sont plus placés idéalement : le premier s'apprête à quitter la partie d'orbite sur laquelle il voyait la zone-cible, le second commence à peine à y entrer, n'étant pas encore en visibilité de toute la zone ZG. Aussi, sans interrompre la continuité de service, les deux satellites successifs S1 et S2 peuvent se trouver plus écartés l'un de l'autre, ce qui fait que par exemple le nombre total de satellites nécessaires à une continuité d'observation peut être réduit, ou encore, alternativement, il est possible de choisir des orbites sur lesquelles les conditions d'observation de la zone cible ZG sont plus réduites, qui par un procédé classique ne permettraient donc pas une continuité de service, alors qu'en procédant comme décrit ci-dessus la continuité de service est possible sur la zone cible ZG.

Les satellites S1 et S2, qui devaient auparavant se suivre de façon à se trouver respectivement en P1 et P2, peuvent maintenant être écartés jusqu'à se trouver respectivement en P11 et P22.

Les sections Z1 et Z2 peuvent en outre évoluer au cours du temps lors de ce transfert de la fonction d'imagerie d'un satellite S1 vers le suivant S2.

De même pour une constellation de satellites mettant en jeu plus de deux satellites, il est possible de définir de manière similaire un partage de la zone cible ZG en trois sections ou plus, associées à autant de satellites entrant en visibilité ou sur le point de quitter la visibilité de la zone cible ZG.

Le résultat de cette méthode est d'étendre la partie "utile" de l'orbite, autorisant un démarrage de service par un satellite, tel une prise d'image, plus tôt que si l'on attendait d'avoir la visibilité complète de la zone cible ZG et symétriquement une fin de service par un satellite plus tardive sur l'orbite : donc au total une meilleure couverture de la zone cible ZG.

Ainsi, on augmente la couverture pour une orbite donnée, mais lors de la phase de définition de la mission elle peut inversement être utilisée pour "relâcher" l'orbite, autrement dit, il est possible d'utiliser des catégories d'orbites qui précédemment n'auraient pas convenu. Ainsi, on peut utiliser des orbites d'inclinaison plus faible, donc plus faciles à atteindre par un lanceur, permettant, en outre une économie de coût de lancement des satellites.

## Revendications

1. Procédé de commande d'un ensemble d'au moins deux satellites (S1, S2), conçus pour fournir un service sur une orbite géostationnaire, rendant ledit service sur une orbite non-géostationnaire, dans lequel on désactive des moyens participant à la réalisation dudit service, embarqués à bord d'un satellite (S1, S2) lorsque le soleil peut l'endommager, et on active des moyens participant à la réalisation dudit service embarqués à bord d'un autre satellite (S1, S2) de l'ensemble, lorsque cela est nécessaire à la continuité du service.

2. Procédé selon la revendication 1, dans lequel on commande l'attitude d'un satellite (S1, S2) en tenant compte de la position instantanée du soleil, de sorte que l'attitude du satellite est provisoirement modifiée lorsque le soleil peut l'endommager.

3. Procédé selon la revendication 2, dans lequel ladite commande d'attitude comprend un pilotage continu en angle de lacet, de sorte que l'attitude du satellite (S1, S2) est modifiée de manière continue lorsque le soleil peut l'endommager, puis lorsque le soleil ne risque plus d'endommager le satellite (S1, S2), la commande d'attitude est à nouveau modifiée de sorte que le pointage du satellite (S1, S2) rejoigne le pointage normal vers une zone géographique cible (ZG) sur laquelle ledit service doit être rendu.

4. Procédé selon l'une des revendications 1 à 3, dans lequel, ledit service rendu par l'ensemble de satellites (S1, S2) étant l'imagerie d'une zone géographique (ZG) de la Terre, les moyens participant à la réalisation dudit service embarqués à bord d'un satellite (S1, S2) sont activés avec un décalage temporel entre lesdits satellites (S1, S2), relatif à la durée de prise de vue d'un satellite (S1, S2).

5. Procédé selon la revendication 4, dans lequel, l'ensemble comprenant deux satellites (S1, S2), la prise de vue d'une zone géographique (ZG) par un satellite démarre lorsque l'autre satellite a effectué la moitié de la prise de vue de ladite zone géographique (ZG).

6. Procédé selon l'une des revendications 1 à 5, dans lequel, lorsque le soleil ne risque pas d'endommager lesdits satellites (S1, S2), on commande lesdits satellites (S1, S2) de sorte qu'à chaque instant, le service rendu pour une zone géographique (ZG), l'est par un seul desdits satellites (S1, S2).

## Patentansprüche

1. Verfahren zum Steuern einer Anordnung von mindestens zwei Satelliten (S1, S2), welche konstruiert sind, um einen Dienst auf einer geostationären Umlaufbahn zu erbringen, welche den Dienst auf einer nicht geostationären Umlaufbahn erbringen, bei welchem Mittel, die an der Ausführung des Dienstes mitwirken, deaktiviert werden, welche an Bord eines Satelliten (S1, S2) mitgeführt werden, wenn die Sonne ihn beschädigen kann, und Mittel, die an der Ausführung des Dienstes mitwirken, welche an Bord eines anderen Satelliten (S1, S2) der Anordnung mitgeführt werden, aktiviert werden, wenn dies für die Kontinuität des Dienstes notwendig ist.

2. Verfahren nach Anspruch 1, bei welchem die Fluglage eines Satelliten (S1, S2) unter Berücksichtigung der augenblicklichen Position der Sonne gesteuert wird, so dass die Fluglage des Satelliten zeitweilig geändert wird, wenn die Sonne ihn beschädigen kann.

3. Verfahren nach Anspruch 2, bei welchem die Fluglagensteuerung eine kontinuierliche Lenkung im Gierwinkel beinhaltet, so dass die Fluglage des Satelliten (S1, S2) kontinuierlich verändert wird, wenn die Sonne ihn beschädigen kann, und anschließend, wenn die Sonne den Satelliten (S1, S2) nicht mehr zu beschädigen droht, die Fluglagensteuerung erneut verändert wird, so dass die Ausrichtung des Satelliten (S1, S2) die normale Ausrichtung auf einen geografischen Zielbereich (ZG) erreicht, in welchem der Dienst erbracht werden soll.

4. Verfahren nach einem der Ansprüche 1 bis 3, bei welchem, da der von der Satellitenanordnung (S1, S2) erbrachte Dienst in der Bildgebung eines geografischen Bereiches (ZG) der Erde besteht, die an der Ausführung des Dienstes beteiligten und an Bord eines Satelliten (S1, S2) mitgeführten Mittel mit einer Zeitverschiebung zwischen den Satelliten (S1, S2) aktiviert werden, welche mit der Dauer der Bildaufnahme eines Satelliten (S1, S2) in Zusammenhang steht.

5. Verfahren nach Anspruch 4, bei welchem, die Anordnung zwei Satelliten (S1, S2) beinhaltet, die Bildaufnahme eines geografischen Bereichs (ZG) durch einen Satelliten beginnt, wenn der andere Satellit die Hälfte der Bildaufnahme des geographischen Bereichs (ZG) durchgeführt hat.

6. Verfahren nach einem der Ansprüche 1 bis 5, bei welchem, wenn die Sonne die Satelliten (S1, S2) nicht zu beschädigen droht, die Satelliten (S1, S2) so gesteuert werden, dass der für einen geographischen Bereich (ZG) erbrachte Dienst zu jedem Zeitpunkt durch einen einzigen der Satelliten (S1, S2) erbracht wird.

## Claims

1. Method for controlling a group of at least two satellites (S1, S2) configured to provide a service on a geostationary orbit, providing the service on a non-geostationary orbit, wherein means which are involved in implementing the service and which are on-board a satellite (S1, S2) are deactivated when the sun may damage it, and means which are involved in implementing the service and which are on-board another satellite (S1, S2) of the group are activated when it is necessary for the continuity of service.

2. Method according to claim 1, wherein the attitude of a satellite (S1, S2) is controlled taking into account the instantaneous position of the sun so that the attitude of the satellite is provisionally modified when the sun may damage it.

3. Method according to claim 2, wherein the attitude control involves continuous control of the yaw angle so that the attitude of the satellite (S1, S2) is modified in a continuous manner when the sun may damage it, then, when the sun is no longer at risk of damaging the satellite (S1, S2), the attitude control is modified again so that the positioning of the satellite (S1, S2) returns to the normal positioning towards a target geographic zone (ZG) on which the service has to be provided.

4. Method according to any one of claims 1 to 3, wherein, the service provided by the group of satellites (S1, S2) being the imaging of a geographic zone (ZG) of the earth, the means involved in implementing the service on-board a satellite (S1, S2) are activated with a time offset between the satellites (S1, S2) relating to the duration of the exposure of a satellite (S1, S2).

5. Method according to claim 4, wherein the group comprising two satellites (S1, S2), the exposure of a geographic zone (ZG) by a satellite begins when the other satellite has carried out half of the exposure of the geographic zone (ZG).

6. Method according to any one of claims 1 to 5, wherein, when there is no risk of the sun damaging the satellites (S1, S2), the satellites (S1, S2) are controlled so that, at any time, the service provided for a geographic zone (ZG) is provided by only one of the satellites (S1, S2).
